Europäisches Patentamt

European Patent Office

Office européen des brevets

(11) Publication number: **0 227 348**
**A2**

## EUROPEAN PATENT APPLICATION

(21) Application number: 86309418.1

(51) Int. Cl.⁴: **G06F 15/40**

(22) Date of filing: 03.12.86

(30) Priority: 11.12.85 US 807577

(43) Date of publication of application:
01.07.87 Bulletin 87/27

(84) Designated Contracting States:
AT BE CH DE ES FR GB GR IT LI LU NL SE

(71) Applicant: **ADVANCED MICRO DEVICES, INC.**
**901 Thompson Place P.O. Box 3453**
**Sunnyvale, CA 94088(US)**

(72) Inventor: **Price, Simon,**
**505 Cypress Point Drive, No. 206**
**Mt. View California 94043(US)**

(74) Representative: **Wright, Hugh Ronald et al**
**Brookes & Martin 52/54 High Holborn**
**London WC1V 6SE(GB)**

(54) Content addressable memory circuit and method.

(57) A method for horizontally cascading content addressable memory (CAM) devices characterized by the division of the memory locations within each of the CAM devices into three portions, where one of the memory portions is used to store content, and the other two memory portions are used to link memory locations between adjacent CAM devices. A comparand is divided into a number of comparand subfields, and each of the comparand subfields is applied to one of the CAM devices. High order match information and linking information are cascaded from each higher order CAM device to an immediately adjacent, next-lower-order CAM device. The lowest order device provides an indication of a match between the comparand and a stored value within the CAM system. Content values are stored in their respective subfields within a specific data structure that allows only unique values in the most significant subfield while allowing limited multiple occurrences (ambiguity) in the lower order subfields. Also disclosed is the circuitry of a practical CAM device, and an architecture for a CAM system utilizing the CAM device.

EP 0 227 348 A2

## CONTENT ADDRESSABLE MEMORY CIRCUIT AND METHOD

This invention relates generally to digital memory, and more particularly to associative or content addressable memory circuits.

The most common type of read/write digital memory is random access memory (RAM). RAM is responsive to an address bus and a control bus, and generally has a bidirectional data bus. An address is put on the address bus by a central processing unit (CPU), direct memory access (DMA) device, or other addressing device. The address on the address bus specifies a unique storage location within the RAM. The storage location can be a single bit, or a number of associated bits arranged as a word of memory. The control bus serves to validate the address on the address bus, and to specify the direction of the data transfer.

Address values are contiguous within RAM. As such, the RAM addressing structure is said to be unambiguous in that a RAM address specifies one and only one data storage location. Due to RAM's unambiguous addressing structure, there is an exact relationship between the width of the address field and memory storage capacity.

While RAM is well suited for many digital applications, it is not particularly well suited for use in systems which process associative data. For example, the sequential access to data when addressing RAM can be inefficient for systems involved in pattern recognition, natural language recognition, sparse matrix processing, and database interrogation.

More general memory devices and systems permit non-contiguous and ambiguous address values. Stored values can be distributed throughout memory in a nonsequential manner, and more than one data element can be associated with a single address value.

With general memory types, there is an inexact relationship between the width of the address field and the memory storage capacity. The storage capacity of general memory types having ambiguous and non-contiguous addressing structures can be less than the storage capacity of RAM with an equivalent address fieldwidth.

One type of general memory is known as content addressable memory (CAM). Storage locations within CAM are addressed by an incoming bit pattern called a comparand. Part of each storage location within the CAM can be considered to contain an associated address, where the remainder of the storage location can be considered to contain associated data. The comparand is compared, in parallel, to associated addresses of all storage locations, and if the associated address has the desired relationship to the comparand the associated data at that location can be accessed. Alternatively, the comparand can be compared to the entirety of the storage locations to detect whether the particular bit pattern corresponding to the comparand is stored within the CAM.

A typical CAM includes a comparand input bus, a control input bus, a match flag output, a bidirectional data bus, and a mask bus. A number of comparison operations built into the CAM and selected by the control bus may be allowable, including equality, inequality, less than, greater than, etc. The mask bus provides means to mask certain bits of the comparand during a comparison function, and to mask certain bits of the content address during a writing function. For example, upon a comparison function, masked bits can be forced to give a true comparison. Masks are used less frequently with a writing function, since the stored data would be permanently and irrevocably altered.

A characteristic of CAM which follows from its addressing structure is that ambiguous content addresses may be permitted. In other words, a number of storage locations within the CAM may contain the same associated address. However, when writing to a CAM the decision can be made whether to suppress or allow ambiguous writes. If ambiguous writes are allowed, then multiple responses may result upon a compare. Multiple responses may also result from other comparison functions that do not have unique results, such as greater than or less than operations.

Multiple responses from a CAM are usually accessed serially. The order of access can be determined by the data's position in memory, the value of the content address, or the value of the associated data.

The amount of memory required by a digital system is often greater than that available on a single device. Furthermore, by being able to build a memory system from a number of memory devices the architecture of the memory system is not limited by the architecture of the memory device. In consequence, a number of individual memory devices are commonly connected horizontally and/or vertically in a matrix configuration. The horizontal connection of memory elements increases the effective width of a stored word of memory, and the vertical connection of memory elements increases the number of memory locations available in the memory system.

With RAM memory, the methods for horizontally and vertically connecting memory devices are well known. The vertical connection of CAM elements is likewise a straightforward matter. However, engineers attempting the horizontal cascading of CAM elements have had trouble in achieving their goals because of the difficulties involved in conveying match information between the CAM elements. In the past, the conveyance of match information required multi-cycle comparisons of the individual devices, or an unacceptably large number of intersubfield bus lines.

The only known commercially available CAM device which tackles the horizontal cascading problem is the Fairchild F100142 4x4 CAM, which has one open emitter line associated with each memory location to convey intersubfield linking information. This solution requires one pin per memory location for intersubfield communication, resulting in a chip of very low data storage capacity. For example, using the Fairchild F100142 device, a modest 1K x 16 CAM system would require 1024 devices, each residing in a 28 pin package and consuming up to 288 mA at 4.2V. This hypothetical memory system would therefore consume over 1.2 kilowatts of power. Such a system is inappropriate for most applications.

We will describe a method for horizontally cascading a plurality of CAM devices to increase the effective width of the CAM storage locations of a CAM system.

We will describe a CAM circuit architecture which permits the building of CAM systems that are independent of the architecture of the individual CAM circuits.

We will also describe a flexible CAM system architecture which can be expanded both horizontally and vertically in a cost effective manner.

The method to be described includes the horizontal arrangement of a plurality of CAM subfields into a CAM sector. A comparand is divided into a number of comparand subfields, each of which is applied to one of the CAM subfields. The storage locations within each of the CAM subfields are divided into a content subfield portion, a content subfield location portion, and a linking value portion. The comparand subfields are compared to the content subfield portions of an associated CAM subfield to determine whether a content subfield portion contains a value which favorably compares to the incoming comparand subfield. If there is a storage location within each of the subfields which makes a favorable match with its associated comparand subfield, and if those storage locations are properly linked by the match of the content subfield location portion and the linking value portion in adjacent CAM subfields, then a CAM sector match output is developed at the lowest order CAM subfield. The memory system derived by the above described method can be easily expanded in a vertical manner by adding additional sectors of the same configuration.

A practical horizontally cascadable content addressable circuit includes a plurality of storage locations, where each of the storage locations is divided into a content subfield portion, a content subfield location portion, and a linking value portion. An incoming bit pattern is compared simultaneously and in parallel with all existing content address bit patterns by means of comparators integral to the content address memory locations of each subfield. Furthermore, an incoming intersubfield bit pattern is compared simultaneously and in parallel with all existing linking value bit patterns of each of the storage locations by means of comparators integral to the linking value memory locations of each subfield. Match logic is responsive to an enabling input, to the comparand comparators, and to the intersubfield comparators. When enabled, the match logic will develop an enabling output signal when a particular comparand comparator and its associated intersubfield comparator indicate favorable comparisons at that particular single storage location within the content addressable circuit. An intersubfield output circuit outputs the content subfield location bit pattern of the matching location and an associated enable signal that indicates that a match has occurred. Content subfield values are stored in their respective subfields within a specific data structure. This data structure restricts the multiple occurrence (ambiguity) of values within a subfield. In the most significant subfield only unique values can exist, while in lower order subfields limited multiple occurrences are permitted.

The architecture of the content addressable memory system embodying the previously described methodology includes a plurality of content addressable memory devices arranged serially from a highest order device to a lowest order device to form a sector. The intersubfield linking output bus of a higher order device is coupled to the intersubfield linking input bus of an adjacent, next-lower-order device within the sector. Similarly, the enable output of a higher order device is coupled to the enable input of an adjacent, next-lower-order device within the sector. A plurality of sectors are cascaded by coupling corresponding devices in the various sectors to the same comparand subfield bus. The lowest order device of each sector may be coupled to a multiple response handling circuit if ambiguous writes are allowed. The content subfield location and enable output of the lowest order device of each sector can be used to read associated data from random access memory.

An advantage of this arrangement is that it provides a method for efficiently horizontally cascading CAM devices. The memory location linking method of the present arrangement greatly reduces the number of signal lines required to transfer intersubfield linking information.

Another advantage of this arrangement is that the architecture of the memory system is not limited by the architecture of its constituent CAM devices. The number of subfields within a sector can be arbitrarily large, as can be the number of sectors.

Other objects, features and advantages of the present invention will become apparent upon consideration of the following detailed description and the accompanying drawings, in which like reference designations represent like features throughout the figures.

BRIEF DESCRIPTION OF THE DRAWINGS

FIGURE 1 is a block diagram of an horizontally cascaded content addressable memory system in accordance with the present invention;

FIGURE 2 is an example of the data structure used in the memory system shown in Fig. 1;

FIGURE 3 illustrates the subdivision of memory locations of the individual CAM devices which permits intersubfield linking of the devices;

FIGURE 4 illustrates a method for linking adjacent subfields of the memory system;

FIGURE 5 is a flow chart illustrating the method of writing to the memory system which creates a suitable data structure;

FIGURE 6 is an example illustrating how a value is written across the subfields of the memory system;

FIGURE 7 is a graph relating the storage efficiency $\eta$ to the ratio of the address width to the data width of a particular subfield;

FIGURE 8 is a block diagram illustrating a practical horizontally cascadable content addressable memory device; and

FIGURE 9 is a block diagram of a horizontally cascadable content addressable memory system utilizing the device shown in Fig. 8.

DETAILED DESCRIPTION OF THE INVENTION

Reference is made now in detail to a specific embodiment of the present invention, which illustrates the best mode presently contemplated by the inventor for practicing the invention. Alternative embodiments are also briefly described as applicable.

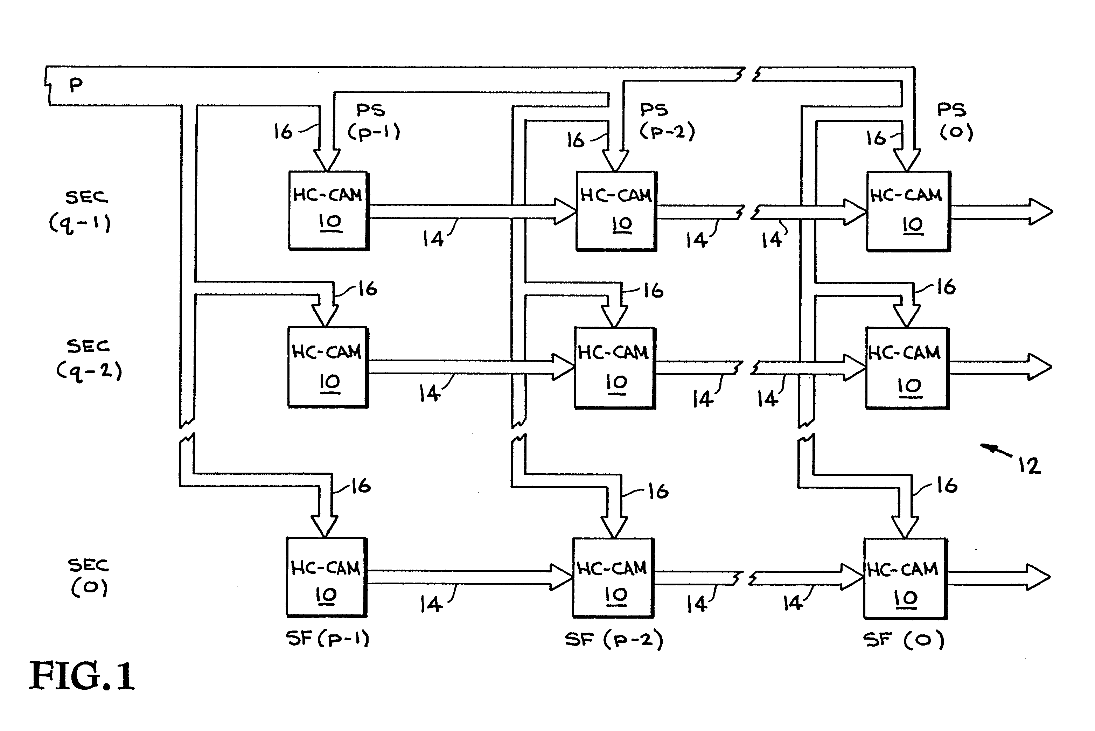

Referring to Fig. 1, a horizontally cascaded CAM system in accordance with the present invention includes a plurality of interconnected CAM devices 10. For the purposes of abbreviated notation, a horizontally cascaded CAM device 10 will be hereafter referred to as a HC-CAM 10. Also, the terms HC-CAM device and HC-CAM circuit will be used somewhat interchangeably, since the circuitry of a single HC-CAM 10 could be produced either as an integrated circuit, or produced by the interconnection of a plurality of discrete devices.

In Fig. 1, the HD-CAMs 10 are arranged in a matrix fashion to create a horizontally cascaded memory system 12. The rows of the matrix will be called sectors, and will be referred to with the notation SEC(L) to designate the $L^{th}$ sector. The columns of memory system 12 will be called subfields, and will be referenced as SF(K) to designate the $K^{th}$ subfield.

In general, a system 12 will have p subfields SF(K) where $0 <= K <= p-1$, and q sectors SEC(L) where $0 <= L <= q-1$. Each sector SEC(L) includes r storage locations where a particular storage location within a SEC(L) is referenced by the variable M, where $0 <= M <= r-1$.

Adjacent HC-CAMs 10 are linked by intersubfield buses 14. Corresponding HC-CAMs in adjacent sectors are connected to common comparand subfield buses 16. The comparand subfield buses will be referenced with the notation PS(K), where K ranges from 0 to p-1 as previously described. An incoming comparand bus P is the collective of the individual comparand subfields PS(K).

Each of the memory locations M within the HC-CAMs 10 include a content subfield referenced as TS-(K)(L)(M). Thus, a particular content subfield TS can be referenced by its subfield location (K), its sector location (L), and its location within the sector (M).

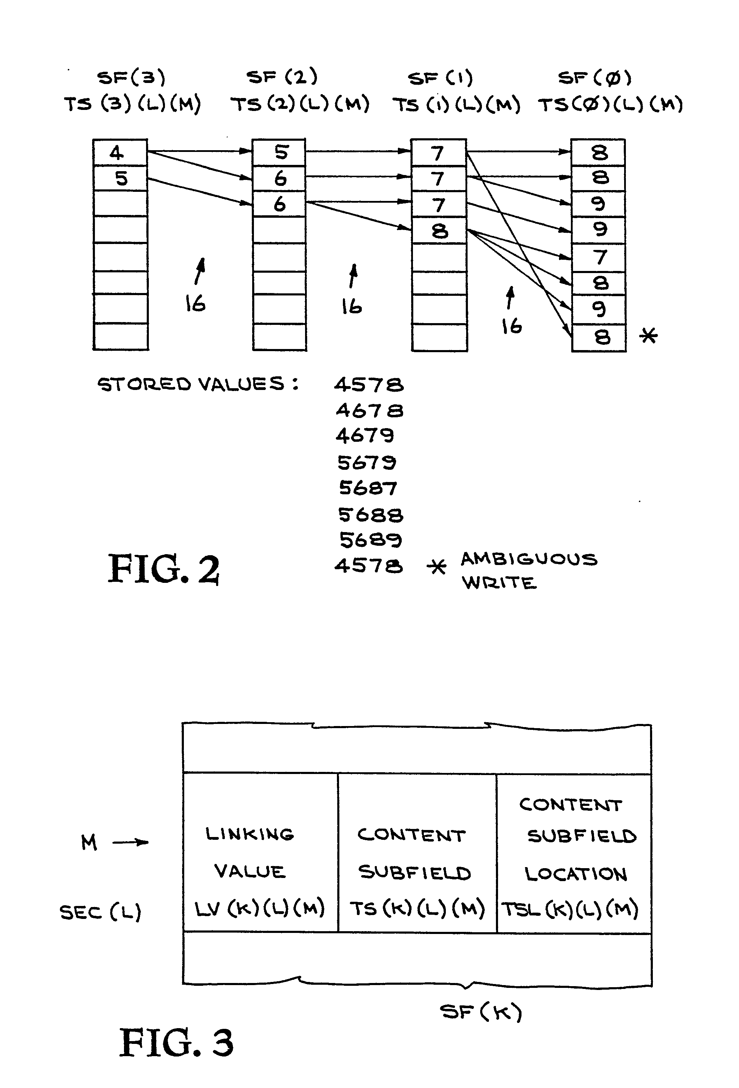

To prevent erroneous match indications between an incoming comparand P and the memory system 12, the data structure of memory system 12 is restricted, and a linking structure is provided. The data structure will be described with reference to Fig. 2, and the linking structure will be described with reference to Fig. 3.

In Fig. 2, four subfields SF(3) -SF(0) are shown. Within the subfields, there are content subfields TS(K)-(L)(M) which range from TS(3)(L)(M) to TS(0)(L)(M). In this example, there are r = 8 memory locations per subfield, such that $0 <= M <= 7$.

For the purpose of illustration, eight four-digit numbers are shown to be stored in content subfields TS-(3)(L)(M) to TS(0)(L)(M). The highest order content subfield (in this case TS(3)(L)(M) is not permitted to have any ambiguity in its storage locations M. In other words, the same value cannot be stored in more than one content subfield TS(3)(L)(M). This is illustrated in Fig. 2 where the digit 4 is uniquely stored in TS-(3)(L)(0), and the digit 5 is uniquely stored in the location TS(3)(L)(1).

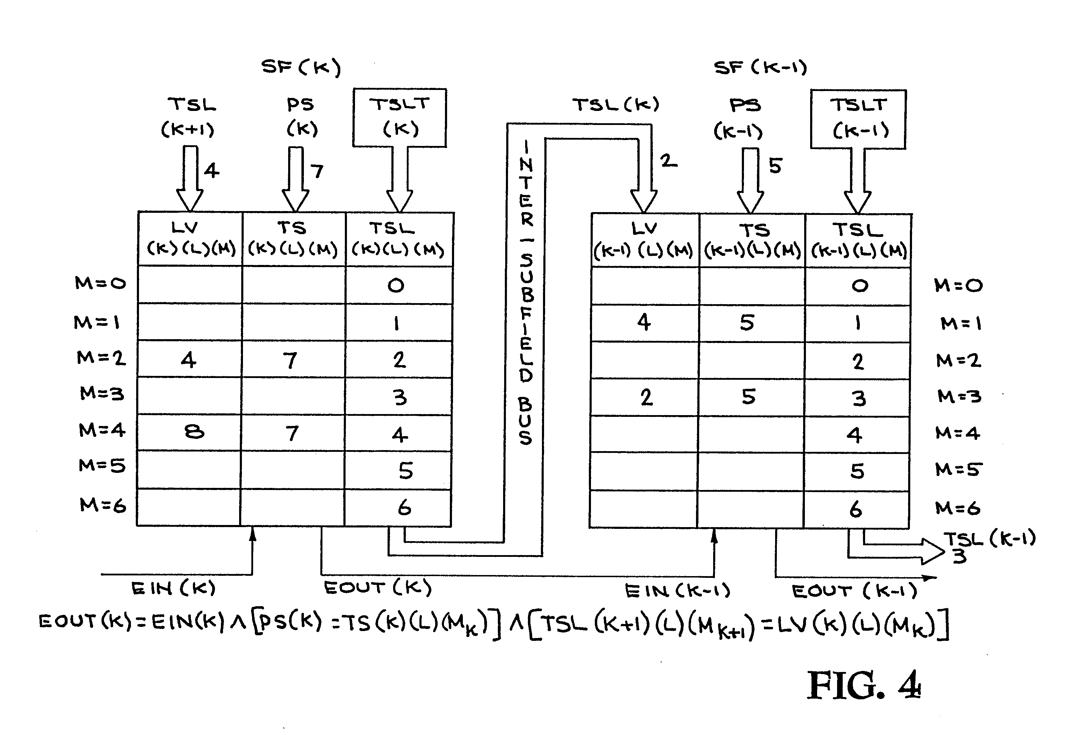

Limited ambiguity is permitted in the lower order content subfields TS(2)(L)(M) to TS(0)(L)(M). For example, in subfield SF(2), the digit 6 is stored in memory location TS(2)(L)(1) and in TS(2)(L)(2). This type of data structure wherein the ambiguity in the highest order subfield is entirely restricted, while in the lower order subfields ambiguity is partially restricted requires a linking structure indicated generally at 16 in Fig. 2, but will be discussed in more detail with reference to Figs. 3 and 4.

Still referring to Fig. 2, an ambiguous write is indicated in subfield SF(0) by the asterisk next to content subfield TS(0)(L)(7). The same number 4578 has been written in content subfields TS(3)(L)(0), TS(2)(L)(0), TS(1)(L)(0), and TS(0)(L)(0). The number 4578 has also been written in content subfields TS(3)(L)(0), TS(2)-(L)(0), and TS(1)(L)(0), and TS (0)(L)(7). Thus, a divergence was permitted at content subfield TS(1)(L)(0) for the ambiguous write. As will discussed subsequently, ambiguous writes may be permitted. If ambiguous writes are permitted then multiple responses to a comparand P will result when comparing that value.

Referring to Fig. 3, a memory location M located in sector SEC(L) and subfield SF(K) is divided into a linking value portion or attribute denoted as LV(K)(L)(M); the aforementioned content subfield portion or attribute TS(K)(L)(M); and a content subfield location portion or attribute denoted as TSL(K)(L)(M). As will be discussed in greater detail with reference to Fig. 4, the linking value attribute LV(K)(L)(M) and the content subfield location attribute TSL(K + 1)(L)(M) provided the proper linking between content subfields TS(K)(L)-(M) in adjacent subfields SF(K + 1) and SF(K).

Referring now to Fig. 4, a subfield SF(K) and an immediately adjacent, next-lower-order subfield SF(K-1) are illustrated in a pictorial form. Subfield SF(K) is responsive to an enabling input EIN(K) which enables or disables the subfield. The subfield SF(K) is also responsive to an intersubfield bus TSL(K + 1), the comparand subfield PS(K), and to a counter TSL↑(K). The subfield SF(K) produces an output on an intersubfield bus TSL(K), and an enabling output signal EOUT(K).

In a similar fashion, subfield SF(K-1) is responsive to TSL(K), a comparand subfield PS(K-1), a counter TSL↑(K-1), and EIN(K-1) which is equal to EOUT(K). Subfield SF(K-1) outputs a TSL(K-1), and an EOUT(K-1).

In each subfield SF(K) the content subfield location TSL(K + 1) is compared, in parallel, to the linking values LV(K)(L)(M). The incoming comparand subfield PS(K) is compared to the content subfield TS(K)(L)-(M). For a particular subfield SF(K), the EOUT(K) signal is developed when TSL(K + 1) = LV(K)(L)(M) and TS(K) = TS(K)(L)(M) in the same storage location M, and if EIN(K) is also valid. This is summarized in the Boolean formulation shown at the bottom of Fig. 4, namely $EOUT(K) = EIN(K) \wedge [PS(K) = TS(K)(L)(M_K)] \wedge [TSL(K + 1)(L)(M_{K+1}) = LV(K)(L)(M_K)]$.

Still referring to Fig. 4, sample digits have been associated with the various memory locations of SF(K) and SF(K-1) and with the content subfield locations TSL and the comparand subfields PS for the purpose of discussion. Starting with subfield SF(K), the TSL(K + 1) bus is indicated to have the value 4, and the PS(K) bus has a value 7. At memory location M = 2, there is a match between TSL(K + 1) and LV(K)(L)(M). Likewise, and also at memory location M = 2, there is a match between PS(K) and TS(K)(L)(M). Assuming that EIN(K) indicates valid higher order matches, an EOUT(K) = EIN(K-1) is produced by subfield SF(K), and a TSL(K) having a value of 2 is input to LV(K-1)(L)(M) of subfield SF(K-1). At subfield SF(K-1) a comparand subfield PS(K-1) has a value 5, such that there is a simultaneous match between TSL(K) and LV(K-1)(L)(M) and PS(K-1) and TS(K-1)(L)(M) at memory location M = 3. This causes EOUT(K-1) to indicate a valid match, and the value of output bus TSL(K-1) to equal the value at TSL(K-1)(L)(3), which is 3.

In Fig. 4, it can be clearly seen how the content subfields TS(K)(L)(M) of adjacent subfields SF(K) and SF(K-1) are linked by the intersubfield bus TSL(K), and the EOUT(K) = EIN(K-1) lines. Each subfield SF(K) has the ability to disable all of the lower order subfields beginning with SF(K-1) if there is not a simultaneous match of TSL(K + 1) with LV(K)(L)(M) and PS(K) with TS(K)(L)(M). The intersubfield bus TSL-(K) provides a means for linking a memory location in a subfield SF(K) with a memory location in a subfield SF(K-1). The intersubfield linking is repeated from the highest order HC-CAM 10 to the lowest order HC-CAM 10.

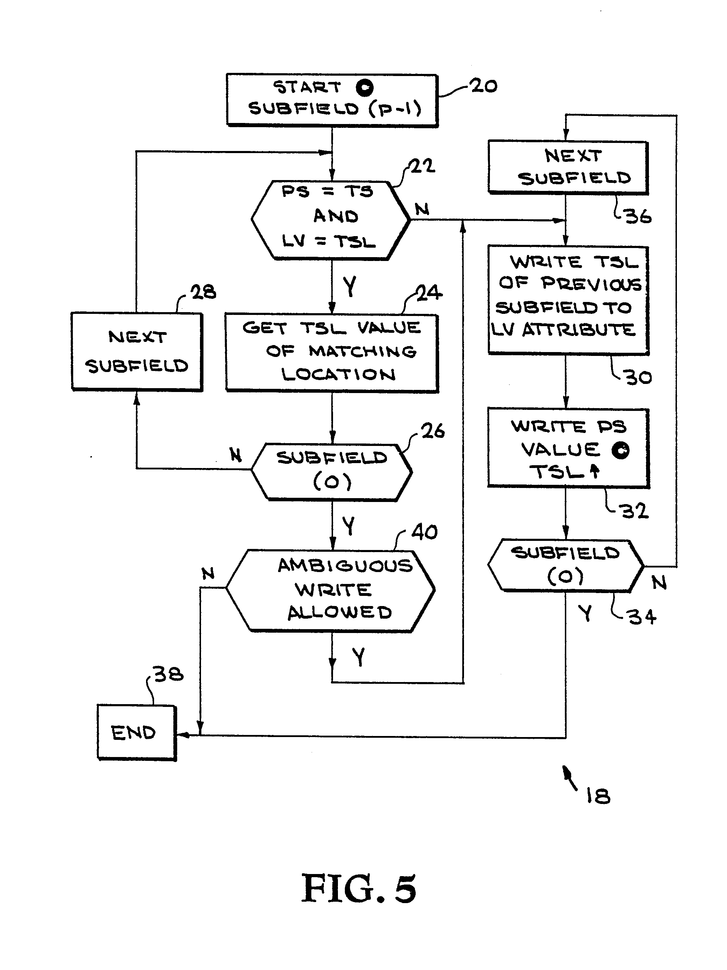

In Fig. 5, a flow chart indicates the basic steps taken to write to the HC-CAMS of Fig. 1 so as to create the described data structure. Starting block 20 indicates that the writing begins with at the highest order subfield SF(p-1). In decision block 22, PS is compared to TS and LV is compared to TSL. If both of these conditions are true, the TS value of the matching location is obtained as indicated in block 24. The next step, as indicated by decision block 26, is to determine whether the subfield SF is SF(0). If not, the next-less-significant subfield is accessed as indicated by block 28, and the loop of blocks 22-28 is repeated until a comparison at decision block 22 is false or a comparison at decision block 26 is true.

If the comparison at decision block 22 is false (i.e. PS is not equal to TS, or LV is not equal to TSL) then the TSL of the previous subfield is written to the LV portion of the current subfield, as indicated at block 30. The PS value at the current subfield is then written at a memory location determined by TSL↑ as indicated at block 32, and then the determination is made whether the next lower subfield is SF(0) at a decision block 34. If it is not, the next lower subfield is selected at block 36 and the loop of blocks 30-36 is repeated until the subfield is SF(0) as determined by decision block 34. The writing routine is then exited as indicated at termination block 38.

If subfield SF(0) is reached at decision block 26, a decision is made at a decision block 40 whether to allow ambiguous writes. If ambiguous writes are not allowed, the routine exits to termination block 38. If ambiguous writes are allowed, the steps of blocks 30, 32, and 34 are followed before exiting via terminating block 38.

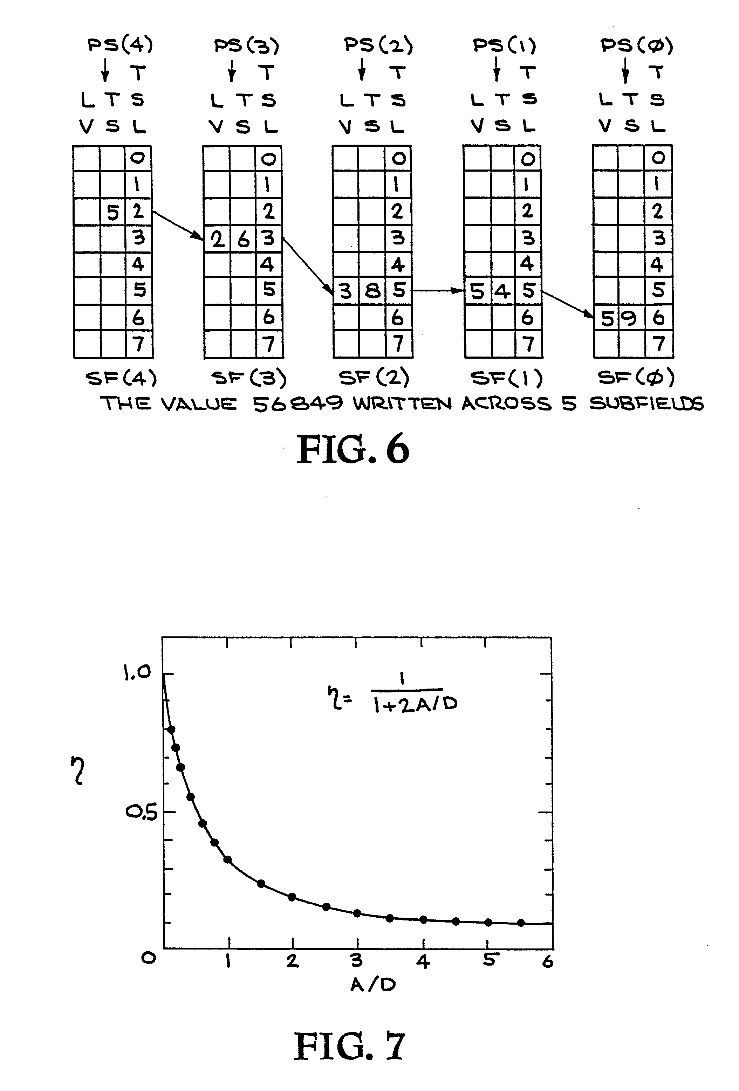

In Fig. 6, an example is shown which writes the value 56849 across 5 subfields SF(4) to SF(0). With reference to both Figs. 5 and 6, the procedure starts at block 22 of Fig. 5 to determine whether PS(4) is equal to the TS of any of the memory locations m in sector SF(4). Assuming that there is no match between PS and TS at sector SF(4), the value of PS(4) = 5 is written to the first available memory location as indicated by the value of TSL↑(4), which in the case of SF(4) of Fig. 6 is $M_2$ = 2. This action is indicated in block 32 of Fig. 5. Since the subfield number is not equal to 0, a decision at block 34 leads the algorithm to block 36 which selects the next lower subfield SF(3). Block 30 indicates that the TSL value of 2 of SF(4) is written to the LV attribute of SF(3) at the next available TSL value, which in this case is $M_3$ = 3. The PS-(3) value is written to TS at memory location $M_3 = 3$ as indicated by block 32. The loop of blocks 30-36 are thus repeated until the value 56849 has been written across all five subfields.

As should be apparent from the preceding discussion, only the TS attribute represents storage that is useful to a memory system user. The TSL and LV attributes are used for linking purposes only. To determine the storage efficiency of devices built with the above described architectures, the storage efficiency could be defined as the ratio of the storage used for the TS attribute to the total storage required by the device. The efficiency $\eta$ is given as follows: $\eta = 1/(1 + nA/D)$, where $A = \log_2 r$ is the number of bits required for the LV and TSL attributes, and where D is the number of bits required for the TS attribute. If the bit storage circuits for all of the three attributes are assumed to be roughly equivalent in size, then the multiplier n is n = 2. However, it has been found that the TSL attributes can be stored in more compact bit storage circuits, which decreases the multiplier to approximately n = 1.5, increasing the efficiency for a particular ratio of A/D.

In Fig. 7, the efficiency $\eta$ is plotted as a function of A/D with n = 2. It can be seen that as A/D approaches 0 the efficiency $\eta$ approaches 1. When A/D equals 1/2, the efficiency drops to 1/2. When A/D equals 1, the efficiency is 1/3. Thus, it can be seen that the efficiency $\eta$ rapidly falls off as A/D increases.

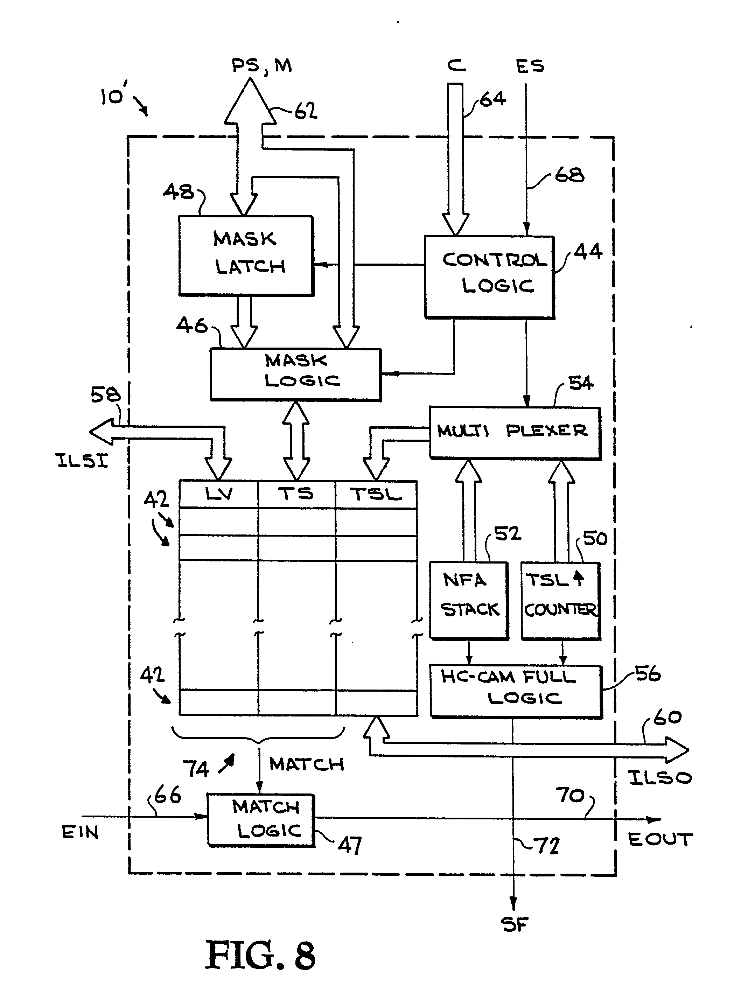

With reference to Fig. 8, a block diagram of a practical HC-CAM device 10' is shown. The HC-CAM 10' includes a number of storage locations 42, where each storage location is divided into an LV portion, a TS portion, and a TSL portion. HC-CAM 10' further includes control logic 44, mask logic 46, match logic 47, a mask latch 48, a TSL↑ counter 50, a next-free-address (NFA) stack 52, a multiplexer 54, and HC-CAM full logic 56.

HC-CAM 10' has a bidirectional bus 58 which can carry the intersubfield linking input bus information ISLI. The HC-CAM 10' also includes a bidirectional bus 60 which can carry the intersubfield linking output bus information ILSO. A bidirectional bus 62 can carry the comparand subfield PS, and an input bus 64 includes a number of control lines. An enable input EIN is developed on a line 66, and an enable write to subfield input ES is developed on a line 68. The enable output signal EOUT is developed on a line 70, and a subfield full signal SF is developed on a line 72.

Buses 58, 60, and 62 are bidirectional so that the HC-CAM 10' can be read as RAM in a reverse mode. This feature of HC-CAM 10' will be discussed subsequently. However, when being used as a HC-CAM, the bus 58 is normally an input bus for ILSI, the bus 60 is normally an output bus for ILSO, and bus 62 is normally an input bus for PS or for a mask m.

To initialize a HC-CAM 10', a mask m is input on bus 62 and an appropriate control signal is input on bus 64 causing mask latch 48 to latch onto the mask m bit pattern. The mask m permits certain bits of the TS attribute to be selectively disabled or enabled. After the mask m has been stored within mask latch 48, a comparand PS may be applied to bus 62. Mask logic 46 operates on the PS and TS comparison logic according to the contents of mask latch 48.

Match logic 47 is responsive to the matches between ILSI and the LV attribute, and between the masked PS input and TS attribute as indicated by the brackets and arrow at 74. Match logic 47 is also responsive to EIN on line 66, and develops a signal EOUT on line 70 as previously shown and described with reference to Fig. 4.

When writing, the next memory location 42 is determined by the TSL↑ counter 50 and the NFA stack 52, which is preferably a last in, first out (LIFO) type stack. If a memory location 42 had been erased by a previous operation, its address is pushed onto NFA stack 52. Control logic 44, sensing that NFA stack 52 is not empty, will pop the address from the NFA stack 52 and use it for the next TSL value. If the NFA stack is empty, a control logic 44 switches multiplexer 54 such that TSL↑ 50 provides the next TSL address. TSL↑ counter 50, in its simplest form, is a binary up-counter.

HC-CAM full logic 56 monitors both NFA stack 52 and TSL↑ counter 50. When the NFA stack 52 is empty, and the TSL↑ counter has reached the last memory location 42, a subfield full signal SF is developed on line 72. The subfield full signal SF on line 72 can be input into the enable write to subfield input ES on a line 68 of a HC-CAM 10' in an adjoining sector.

As mentioned previously, the HC-CAM 10' can be used in a reverse mode as Random Access Memory (RAM). While the random access circuitry for such an operation is not shown herein, the basic method for randomly accessing information from HC-CAMS 10' is to input an address on bus 60 which creates a pointer on bus 58 and a TS content subfield output on bus 62. The pointer on bus 58 is used as an input address on a bus 60 of the next-higher-order HC-CAM 10'. In this fashion, the HC-CAMS are cascaded in a reverse order, and develop a data output on a comparand bus P which is the collective of the individual outputs on buses 62 of the HC-CAMS 10'.

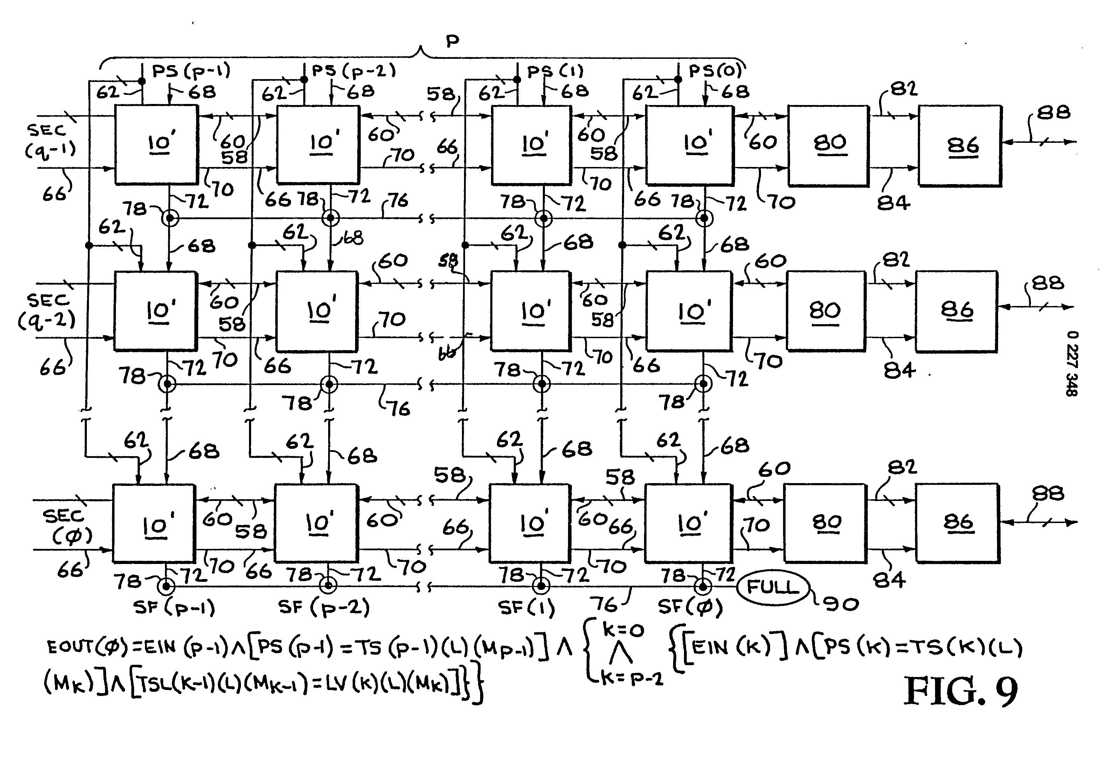

Referring now to Fig. 9, a number of HC-CAMS 10' are coupled together in matrix form creating a memory system having q sectors and p subfields. The comparand subfield PS(p-1) is coupled to the bus inputs 62 of all of the HC-CAMS 10' in subfield SF(p-1). Likewise, the comparand subfields PS(p-2) to PS-(0) are coupled to the input buses 62 of the HC-CAM devices 10' of subfields SF(p-2) to SF(0). The sharing of the comparand subfield PS(K) for a particular subfield SF(K) is the basic structure for vertically coupling the HC-CAM 10' devices.

A sector enable line 76 is provided between each adjacent sector SEC(L). Coupled to the sector enable lines are the subfield full lines at 72 of the higher order sector, and the enable write to subfield ES line 68 of the adjacent lower order sector. The circular symbol 78 signifies a hardwired OR which has the affect of ORing the outputs on lines 72 for a particular sector to develop a resultant on lines 68 of the next-lower-order sector. From a practical point of view, this can be accomplished by making subfield full line 72 on open collector output, such that a low level output on any one of lines 72 will create a low logic level on a sector enable line 76 without damaging the circuitry of the remaining HC-CAMs 10' in the sector.

Within a sector, a bidirectional bus 60 of a higher order HC-CAM 10' is coupled directly to bidirectional bus 58 of the next-lower-order HC-CAM 10'. In a similar fashion, EOUT line 70 of a higher order HC-CAM 10' is coupled to the EIN input lines 66 of the next-lower-order HC-CAM 10'. Thus, as previously described, the linking bus signals and the enable signals can be cascaded from subfield to subfield starting with the highest order of subfield SF(p-1) and ending with subfield SF(0).

The enable write to subfield ES input lines 68 for the HC-CAMs 10' of sector SEC(q-1) can be coupled to ground to write enable the first sector SEC(q-1). Similarly, the EIN lines 66 of subfield (p-1) can be wired to V_cc to enable HC-CAMs 10' along subfield SF(p-1). Alternatively, the logic level on input lines 66 and 68 can be controlled by external logic to selectively turn on and off various subfields and sectors.

The lowest order HC-CAMs of subfield SF(0) may be coupled to multiple response handling circuits 80. The multiple response handling circuits 80 are each responsive to the bus 60 of the lowest order HC-CAM 10′ of a particular sector. The multiple response handling circuits 80 are also responsive to the EOUT signal of the lowest order HC-CAM 10′ of that sector. The function of multiple response handling circuits 80 is to allow sequential access to ambiguous writes made in a particular sector. If ambiguous writes were suppressed, the multiple response handling circuits 80 would not be required.

Multiple response handling circuits 80 output on an address bus 82 and a control line 84. RAM 86 is responsive to an address on bus 82 and a control signal on line 84, and is operative to output or input data on a bidirectional data bus 88.

If ambiguous writes are not allowed in the HC-CAM system, the multiple response handling circuits 80 can be eliminated, and the RAM can be connected directly to the lowest order HC-CAM 10′ of each sector. If a match occurs at some content location when a comparand P is applied to the HC-CAM system, a pointer address will be developed on bus 60 and an enable will be developed on line 70 of the lowest order HC-CAM 10′ to address the associated data in RAM 86.

As a sector is filled up, the next-less-significant sector will be activated by its associated sector enable line 76. When the sector enable line 76 of the lowest order sector SEC(0) is activated, a CAM system full signal will be developed as indicated at 90.

EOUT(0) for a particular sector as developed on line 70 of the HC-CAM in subfield SF(0) can be determined by the following expression:

$$EOUT(0) = EIN(p-1) \wedge [PS(p-1) = TS(p-1)(L)(M_{p-1})] \wedge \bigwedge_{K=p-2}^{K=0} \left\{ \begin{array}{l} [EIN(K)] \wedge [PS(K) = TS(K)(L)(M_K)] \wedge \\ [TSL(K+1)(L)(M_{K+1}) = LV(K)(L)(M_K)] \end{array} \right\}$$

This expression is merely an extension of the expression shown with regards to Fig. 4, by taking into account the inputs to the HC-CAMs of the highest order subfield SF(p-1).

The foregoing description of the preferred embodiment of the present invention has been presented for purposes of illustration and description. It is not intended to be exhaustive or to limit the invention to the precise form disclosed. Obviously, many modifications and variations will be apparent to practitioners skilled in this art. It is possible that the invention may be practiced in various fabrication technologies including MOS or bipolar technologies. Similarly, any process steps described might be interchangeable with other steps in order to achieve the same result. The embodiment was chosen and described in order to best explain the principles of the invention and its practical application, thereby enabling others skilled in the art to understand the invention for various embodiments and with various modifications as are suited to the particular use contemplated. It is intended that the scope of the invention be defined by the claims appended hereto and their equivalents.

## Claims

1. A method for obtaining a match indication from a plurality of content addressable subfields which are sequentially arranged from a highest order content addressable subfield to a lowest order content addressable subfield comprising the steps of:
dividing a comparand into a plurality of comparand subfields;
applying a comparand subfield to each of said content addressable subfields;
cascading match information between adjacent content addressable subfields starting at said highest order content addressable subfield and proceeding to said lowest order content addressable subfield, where said cascading match information passed between a higher order subfield and an adjacent lower order subfield includes match information derived from all subfields from said higher order subfield to said highest order subfield; and
obtaining said match indication from match information developed by said lowest order content addressable subfield.

2. A method as recited in claim 1 further comprising the step of cascading linking information between adjacent content addressable subfields starting at said highest order content addressable subfield and proceeding to said lowest order content addressable subfield, where said cascading linking information links associated storage locations of said higher order subfield and said lower order subfield.

3. A method as recited in claim 2 further comprising the step of resolving multiple match indications at said lowest order content addressable subfield.

4. A method as recited in claim 1 further comprising the step of resolving multiple match indications at said lowest order content addressable subfield.

5. A method for writing data to a plurality of content addressable subfields which are sequentially arranged from a highest order content addressable subfield to a lowest order content addressable subfield comprising the steps of;
dividing a comparand into a plurality of comparand subfields;
applying a comparand subfield to each of said content addressable subfields;
sequentially comparing said comparand subfields to the stored contents of said content addressable subfields starting with said highest order content addressable subfield and proceeding to a divergence content addressable subfield where a comparand subfield does not match a stored content; and
writing the remaining comparand subfields to said content addressable subfields beginning with said divergence content addressable subfield and proceeding to said lowest order content addressable subfield.

6. A method as recited in claim 5 further comprising the step of writing a comparand subfield to said lowest order content addressable subfield if a divergence content addressable subfield is not found and if ambiguous writes are allowed.

7. A method as recited in claim 5 further comprising the step of linking storage locations in adjacent content addressable subfields during the write operation.

8. In a content addressable memory system including a plurality of CAM subfields which are coupled together to form a CAM sector, where a comparand may be applied to said CAM sector such that individual comparand subfields are applied to individual CAM subfields, and where each of said CAM subfields have a plurality of CAM storage locations, an improved method for linking said CAM subfields comprising:
horizontally cascading said CAM subfields from a most significant CAM subfield to a least significant CAM subfield;
dividing each of said storage locations within each of said CAM subfields into a content subfield portion to hold a content subfield, a content subfield location portion to hold a content subfield location, and a linking value portion to hold a linking value; and
developing a CAM sector match output when there is a favorable comparison between a content subfield and an associated comparand subfield at at least one match location within each CAM subfield, and when the match locations between adjacent CAM subfields are linked by the correspondence of their associated content subfield locations and linking values.

9. A content addressable memory circuit comprising:
a plurality of storage locations, where each storage location is divided into a content subfield portion for storing a content subfield bit pattern, a content subfield location portion for storing a content subfield location bit pattern, and a linking value portion for storing a linking value bit pattern;
comparand comparison means adapted to compare an input comparand bit pattern to said content subfield bit patterns of said storage locations;
intersubfield comparison means adapted to compare an input intersubfield bit pattern to the linking value bit patterns of said storage locations;
match logic responsive to a high order match input, said comparand comparison means, and said intersubfield comparison means and operative to produce a match output when said high order match input indicates that there is a high order match and when an input comparand bit pattern compares to an content subfield bit pattern of a match location and when an input intersubfield comparison bit pattern compares to the linking value bit pattern of said match location; and
intersubfield output means responsive to said match logic and operative to output the content subfield location bit pattern of said match location.

10. A content addressable memory circuit as recited in claim 9 further comprising next-available-address logic responsive to an input control bus and operative to develop the address of the next available storage location the CAM circuit.

11. A content addressable memory circuit as recited in claim 10 wherein said next-available-address logic is further operative to develop a CAM circuit full signal when all available locations within said CAM circuit have been utilized.

12. A content addressable memory circuit comprising:

a plurality of storage locations, where each storage location M is divided into an LV(M) portion, a TS(M) portion, and a TSL(M) portion;

means for comparing, in parallel, a PS input to said TS(M) portions;

means for comparing, in parallel, a TSLIN input to said LV(M) portions;

means responsive to an EIN input, responsive to said means for comparing said PS input and said TS(M) portions, and responsive to said means for comparing said TSLIN input and said LV(M) portions and operative to develop an EOUT output according to the following relation:

EOUT = EIN $\wedge$ [PS = TS(M)] $\wedge$ [TSLIN = LV(M)]

13. A content addressable memory circuit as recited in claim 13 further comprising means for developing a TSLOUT output equal to TSL(M) when said EOUT output is enabled.

14. A content addressable memory system architecture comprising:

a plurality of CAM circuits arranged into q sectors with p subfields per sector, each of said CAM circuits having r storage locations, where each of said storage locations is divided into an LV portion, a TS portion, and a TSL portion; where a particular CAM circuit is specified by a cartesian pair K,L with $0 <= K <= p-1$, and $0 <= L <= q-1$; where a particular storage location is specified by M with $0 <= M <= r-1$; where the K,L CAM circuit is responsive to TSL(K+1), a comparand subfield PS(K), and an EIN(K) = EOUT(K+1); and means for deriving an EOUT(K) according to the following relation:

EOUT(K) = EIN(K) $\wedge$ [PS(K) = TS(K)(L)($M_K$)] $\wedge$ [TSL(K+1)(L)($M_{K+1}$) = LV(K)(L)($M_K$)] for K<p-1.

15. A content addressable memory system architecture as recited in claim 14 wherein

$$\text{EOUT}(0) = \text{EIN}(p-1) \wedge [\text{PS}(p-1) = \text{TS}(p-1)(\text{L})(M_{p-1})] \wedge$$

$$\{ \bigwedge_{K=p-2}^{K=0} \{[\text{EIN}(K)] \wedge [\text{PS}(K) = \text{TS}(K)(\text{L})(M_K)] \wedge$$

$$[\text{TSL}(K+1)(\text{L})(M_{K+1}) = \text{LV}(K)(\text{L})(M_K)]\}\}.$$

16. A content addressable memory circuit comprising:

a plurality of content addressable memory locations, where each memory location is divided into a linking value portion, a content subfield portion, an a content subfield location portion;

link comparison means for comparing an intersubfield linking input bus to said linking value portions of said memory location;

content comparison means for comparing a comparand bus to said content subfield portion; and

match means operative to indicate a match when said link comparison means and said content comparison means both indicate a favorable comparison at a match memory location.

17. A content addressable memory circuit as recited in claim 16 wherein said match means is further responsive to an enable input, and is operative to produce an enable output.

18. A content addressable memory circuit as recited in claim 17 further comprising means for writing a linking value to said linking value portion of a memory location, means for writing a content subfield value to said content subfield portion of a memory location, and means for writing a content subfield location to said content subfield location portion of a memory location.

19. A content addressable memory circuit as recited in claim 18 further comprising full indicator means responsive to said means for writing a content subfield location.

20. A content addressable memory circuit as recited in claim 18 wherein said means for writing a content subfield location includes incremental counter means operative to produce an address.

21. A content addressable memory circuit as recited in claim 20 wherein said means for writing a content subfield location includes a next-free-address stack operative to produce an address.

22. A content addressable memory circuit as recited in claim 21 further comprising multiplexer means responsive to said incremental counter and said next-free-address stack and operative to output an address derived from said address of said incremental counter when said next free address stack is empty, and operative to output an address derived from said address of said next-free-address stack when said next free-address-stack is not empty.

23. A content addressable memory circuit as recited in claim 16 wherein said content comparison means includes mask logic means for masking portions of said comparand bus.

24. A content addressable memory circuit as recited in claim 23 wherein said comparand bus is bidirectional, and further comprising mask latch means coupled between said comparand bus and said mask logic means.

25. A content addressable memory circuit as recited in claim 16 further comprising means for developing an output on an intersubfield linking output bus corresponding to a content subfield location value stored in a content subfield location portion of said match memory location.

26. A content addressable memory circuit as recited in claim 16 further comprising circuit disabling means responsive to an enable-write-to-subfield input.

27. A content addressable memory system comprising:

a plurality of content addressable memory devices comprising a sector, said memory devices being arranged serially from a highest order device to a lowest order device; and where each memory device has a comparand subfield bus, an intersubfield linking input bus, an intersubfield linking output bus, an enable input, and an enable output;

means coupling the intersubfield linking output bus of a higher order device to the intersubfield linking input bus of an adjacent, next-lower-order device within said sector; and

means coupling the enable output of a higher order device to the enable input of an adjacent next-lower-order device within said sector.

28. A content addressable memory system as recited in claim 27 wherein said sector is a first sector having a first plurality of content addressable devices; and further comprising a second sector having a second plurality of content addressable devices having a one-to-one correspondence to said first plurality of content addressable memory devices; and means coupling corresponding devices in said first sector and said second sector to the same comparand subfield bus.

29. A content addressable memory system as recited in claim 27 wherein each of said memory devices further include a device full output which indicates when all of the memory locations within a device have been utilized.

30. A content addressable memory system as recited in claim 29 further comprising means responsive to said device full outputs of said plurality of memory devices in said sector, and operative to produce a sector full output.

31. A content addressable memory system as recited in claim 28 wherein each of said memory devices in said first sector further include a device full output.

32. A content addressable memory system as recited in claim 31 further comprising means responsive to said device full outputs of said memory devices in said first sector, and operative to produce a first sector full output.

33. A content addressable memory system as recited in claim 32 wherein each of said memory devices in said second sector include a write enable input coupled to said first sector full output.

34. A content addressable memory system as recited in claim 27 further comprising multiple response handling means coupled to said lowest order device to permit sequential handling of multiple responses generated by said lowest order device.

35. A content addressable memory system as recited in claim 28 further comprising first multiple response handling means coupled to said lowest order device of said first sector, and second multiple response handling means coupled to a lowest order device of said second sector, said first multiple response handling means permitting sequential handling of multiple responses generated from said first sector, and said second multiple response handling means permitting sequential handling of multiple responses generated from said second sector.

36. A content addressable memory system as recited in claim 27 further comprising random storage means for storing associated data which is addressed by said lowest order device of said sector.

37. A content addressable memory system as recited in claim 28 further comprising first random storage means for storing associated data which is addressed by said lowest order device of said first sector, and second random storage means for storing associated data which is addressed by a lowest order device of said second sector.

FIG.1

SF(3)     SF(2)     SF(1)     SF(∅)

TS(3)(L)(M)   TS(2)(L)(M)   TS(1)(L)(M)   TS(∅)(L)(M)

STORED VALUES:

4578
4678
4679
5679
5687
5688
5689
4578   * AMBIGUOUS WRITE

## FIG. 2

| | LINKING VALUE LV(K)(L)(M) | CONTENT SUBFIELD TS(K)(L)(M) | CONTENT SUBFIELD LOCATION TSL(K)(L)(M) |
|---|---|---|---|

M →

SEC(L)

SF(K)

## FIG. 3

SF (K)

SF (K-1)

TSL (K+1) → 4

PS (K) → 7

TSLT (K)

TSL(K) → 2

PS (K-1) → 5

TSLT (K-1)

INTER-SUBFIELD BUS

| | LV (K)(L)(M) | TS (K)(L)(M) | TSL (K)(L)(M) |
|---|---|---|---|
| M=0 | | | 0 |
| M=1 | | | 1 |
| M=2 | 4 | 7 | 2 |
| M=3 | | | 3 |
| M=4 | 8 | 7 | 4 |
| M=5 | | | 5 |
| M=6 | | | 6 |

EIN (K)   EOUT (K)

| LV (K-1)(L)(M) | TS (K-1)(L)(M) | TSL (K-1)(L)(M) | |
|---|---|---|---|
| | | 0 | M=0 |
| 4 | 5 | 1 | M=1 |
| | | 2 | M=2 |
| 2 | 5 | 3 | M=3 |
| | | 4 | M=4 |
| | | 5 | M=5 |
| | | 6 | M=6 |

EIN (K-1)   EOUT (K-1)

TSL (K-1) → 3

$$EOUT(k) = EIN(k) \wedge \left[ PS(k) = TS(k)(L)(M_k) \right] \wedge \left[ TSL(k+1)(L)(M_{k+1}) = LV(k)(L)(M_k) \right]$$

FIG. 4

FIG. 5

THE VALUE 56849 WRITTEN ACROSS 5 SUBFIELDS

# FIG. 6

$$\eta = \frac{1}{1 + 2A/D}$$

# FIG. 7

FIG. 8

$$EOUT(\phi) = EIN(p-1) \wedge [PS(p-1) = TS(p-1)(L)(M_{p-1})] \wedge \left\{ \bigwedge_{k=P-2}^{k=0} \left\{ [EIN(k)] \wedge [PS(k) = TS(k)(L)(M_k)] \wedge [TSL(k-1)(L)(M_{k-1}) = LV(k)(L)(M_k)] \right\} \right\}$$

FIG. 9